# EUROPEAN PATENT SPECIFICATION

(11) **EP 3 017 157 B1**
(45) Date of publication and mention of the grant of the patent: **21.12.2016**
(21) Application number: 15731632.4
(22) Date of filing: 29.05.2015
(51) Int. Cl.: F01N 3/10

(54) **ARRANGEMENT FOR AND METHOD OF FEEDING AMMONIA CONTAINING FLUID INTO THE EXHAUST GAS PASSAGE OF A COMBUSTION PLANT**
ANORDNUNG UND VERFAHREN ZUM ZUFÜHREN EINER AMMONIAKHALTIGEN FLÜSSIGKEIT IN DIE ABGASÖFFNUNG EINER VERBRENNUNGSANLAGE
SYSTÈME ET PROCÉDÉ D'INTRODUCTION EN FLUIDE CONTENANT DE L'AMMONIAC DANS UN PASSAGE DE GAZ D'ÉCHAPPEMENT D'UNE INSTALLATION DE COMBUSTION

(30) Priority: 04.06.2014 FI 20145511
(43) Date of publication of application: 11.05.2016
(73) Proprietor: Amec Foster Wheeler Energia Oy, 02130 Espoo (FI)
(72) Inventor: HILTUNEN, Teri, FI-79100 Leppävirta (FI); LANTTO, Jouni, FI-90540 Oulu (FI)
(74) Representative: Genip Oy
(86) International application number: PCT/FI2015/050376
(87) International publication number: WO 2015/185798

(56) References cited:
- EP-A2- 2 583 740
- WO-A1-91/17814

## Description

### BACKGROUND OF THE INVENTION

### Field of the Invention

The present invention relates to an arrangement for and a method of feeding ammonia containing fluid into an exhaust gas passage of a combustion plant in accordance with the preamble of claims 1 and 11. More particularly, the present invention relates to feeding ammonia containing fluid into an exhaust gas passage of a combustion plant comprising a first fluid line connectable in flow connection with a source of an ammonia containing fluid, a second fluid line in flow connection with a source of a dilution fluid and a control unit for controlling multiple valve members, each of the valve members having a first inlet in flow connection with the first fluid line, a second inlet in flow connection with the second fluid line and an outlet in flow connection with the exhaust gas passage.

### Description of related art

Reduction of nitrogen oxide (NOₓ) emissions from exhaust gases, before they are released into the atmosphere, has been a prolific topic of discussion in the field of environmental aspects of energy production by combustion of fuel material. Because NOₓ emissions are related to various environmental problems, the minimizing of NOₓ release from combustion plants is an ongoing concern.

A generally used method to reduce NOₓ levels in exhaust gases is introducing reducing agent such as ammonia or ammonia precursor into the exhaust gases. Different locations for injecting reducing agents, particularly ammonia, have been suggested, for example, in patent documents US 5,820,838, US 5,462,718, US 4,756,890, US 5,342,592 and GB 1 514 529. The documents suggest introducing reagent into the furnace, into a channel between the furnace and a particle separator, into the particle separator or into an exhaust gas duct.

Patent document WO 91/17814 A1 suggests injecting, for example, a mixture of ammonia and water as fine droplets of liquid dispersed in a gaseous component, such as air, into the exhaust gas at sonic velocity to achieve a distribution of particles of sizes effective to uniformly reduce NOₓ within a zone of effective temperature.

Patent document US 2010/0154690 A1 discloses a method for injecting reducing agent, such as ammonia, into a boiler of a garbage incineration plant using a gaseous propellant, such as steam or air. The reducing agent and the propellant are combined in a distributor, from where they are conducted in desired quantities via multiple injection lines and respective nozzles into the boiler.

A problem with ammonia based reagents can be that blocking of the nozzles or other devices through which the ammonia is fed. In some cases, the combustion process needs to be stopped while cleaning the nozzles. It may also be difficult to control the flow of ammonia so as to efficiently reduce NOₓ emissions without causing harmful ammonia slip in different combustion conditions, for example, in different load conditions or when using varying fuels.

The reducing agent supply device of EP2583740 therefore includes a reducing agent supply unit for supplying a reducing agent to a selective supply unit, a water supply unit for supplying water to the selective supply unit, the selective supply unit for selectively supplying any one of the reducing agent and water supplied from the reducing agent supply unit and the water supply unit to a spray unit, and the spray unit for spraying the reducing agent or water supplied from the selective supply unit, wherein the selective supply unit supplies water to the spray unit when the spray unit is blocked due to solidification of the reducing agent which remains behind therein because of a process in which the spray unit continuously sprays the reducing agent or a temporary malfunction of the device, thereby preventing blockage of the spray unit.

An object of the present invention is to provide an arrangement for and a method of feeding ammonia containing fluid into an exhaust gas passage of a combustion plant in which at least a part of the above mentioned problems of prior art are minimized.

### SUMMARY OF THE INVENTION

According to an aspect, the present invention provides an arrangement for feeding ammonia containing fluid into an exhaust gas passage of a combustion plant comprising a first fluid line connectable in flow connection with a source of an ammonia containing fluid, a second fluid line in flow connection with a source of a dilution fluid and a control unit for controlling multiple valve members, each of the valve members having a first inlet in flow connection with the first fluid line, a second inlet in flow connection with the second fluid line and an outlet in flow connection with the an outlet channel connected to the exhaust gas passage. It is characteristic to the invention that the valve members are connected in parallel so that each of the valve members is in flow connection with a common outlet channel, wherein the control unit is adapted for controlling each of the valve members to maintain open flow path from either the first inlet or the second inlet to the outlet so as to feed a flow of either the ammonia containing fluid or the dilution fluid via the valve member to the common outlet channel.

According to another aspect, the present invention provides a method of feeding ammonia containing fluid into an exhaust gas passage of a combustion plant comprising the steps of introducing ammonia containing fluid from a source of an ammonia containing fluid into a first fluid line, introducing dilution fluid from a source of a dilution fluid into a second fluid line, and controlling multiple valve members with a control unit, each of the valve members having a first inlet in flow connection with the first fluid line, a second inlet in flow connection with the second fluid line and an outlet in flow connection with an outlet channel connected to the exhaust gas passage. It is characteristic to the method that the valve members are connected in parallel so that each of the valve members is in flow connection with a common outlet channel, and by the step of controlling each of the valve members by the control unit to maintain open flow path from either the first inlet or the second inlet to the outlet so as to feed a flow of either the ammonia containing fluid or the dilution fluid via the valve member to the common outlet channel.

A main feature of the present invention is that during the operation of the combustion plant a continuous, preferably substantially constant, flow of fluid is conveyed through the feeding arrangement, and more specifically, through each of the valve members. Depending on the state of the feeding arrangement, a stream of either the ammonia containing fluid or the dilution fluid flows through each of the valve members. When the streams from the individual valve members are combined in the common outlet channel, a continuous, preferably substantially constant, flow of fluid is formed. The combined fluid stream is then injected into the exhaust gas passage, whereby a continuous stream of fluid flows through the feeding arrangement, but the concentration of ammonia containing fluid in the combined fluid stream is varied.

Hence, the present invention offers a new solution for feeding ammonia containing fluid into an exhaust gas passage of a combustion plant. The method of feeding ammonia containing fluid comprises controlling the multiple valve members so as to control the ratio of the flow of the ammonia containing fluid and the flow of the dilution fluid in the common outlet channel. The invention provides a precise and reliable way to control the amount of ammonia containing fluid to be injected to the exhaust gas passage. More specifically, the invention provides a way to control the amount of ammonia containing fluid by controlling the concentration of the ammonia containing fluid in a continuous, preferably substantially constant, flow of fluid injected to the exhaust gas passage. In addition, because there is a continuous flow of liquid through the system and through each of the valve members, the risk of blocking of the system, or any portion of the system, is considerably reduced.

According to a preferred embodiment of the present invention, each of the multiple valve members comprises a three-way valve. Thereby, the first inlet of each of the three-way valves is in flow connection with the first fluid line, the second inlet of each of the three-way valves is in flow connection with the second fluid line and the outlet of each of the three-way valves is in flow connection with the common outlet channel connected to the exhaust gas passage.

Each of the multiple valve members has advantageously a specific throughput. Thereby, a predefined flow of either the ammonia containing fluid or the dilution fluid is continuously fed through each of the multiple valve members to the exhaust gas passage. More specifically, when each of the fluids is at a predetermined pressure the specific throughput determines the flow of either the ammonia containing fluid or the dilution fluid through the valve member. According to a preferable embodiment of the present invention, each of the first and second fluid lines is provided with a pump to maintain a predetermined fluid pressure in the first and second fluid lines, respectively.

Generally, the specific throughputs of individual valve members of the multiple valve members can be identical, but advantageously the specific throughputs differ from each other. According to a preferred embodiment of the present invention, each of the multiple valve members in a feeding arrangement has a different specific throughput. According to an especially preferred embodiment of the present invention, the arrangement comprises N valve members numbered as 1, 2, 3,..., N and having relative specific throughputs as 1, 2, 4,..., 2^{(N-1)}.

If N is, for example, 5, the relative specific throughputs are then 1, 2, 4, 8 and 16. If the relative throughputs represent fluid flows in liters/hour (l/h), the total combined flow is 31 l/h. The total flow of fluid consists of a flow amounting to any integer M from 0 to 31 l/h of the ammonia containing fluid. The rest of the flow, amounting to 31 - M l/h, is then of the dilution fluid. In the above described example, the resolution of the flow control is 1 l/h. Naturally, the resolution can be freely selected based, for example, on the size of the plant. Thus, the resolution can be, for example, 0.5 l/h or 2 l/h.

According to a preferred embodiment of the present invention, the ammonia containing fluid is ammonia solution in water, having an ammonia concentration of 0 % - 25 %, and the dilution fluid is water. Typically the ammonia containing fluid is 25 % ammonia solution in water, whereby the feeding arrangement according to the present invention provides a solution of ammonia in water in a controllable concentration of 0 % - 25 %. The ammonia containing fluid can alternatively be other NOx reducing agent, such as urea solution in water or ammonia solution containing also other chemicals.

When using the present invention, typically an additional amount of dilution fluid, such as water, is injected into the exhaust gas passage. However, the maximum amount of dilution fluid fed into the exhaust gas passage in any condition is only as much as the maximum amount of ammonia containing fluid to be fed into the exhaust gas passage. Therefore it is possible to select the fluid feeding amount and the dilution fluid, such as water, so that the dilution fluid does not make any harm the combustion process.

On the other hand, the dilution fluid provides the advantage of acting as a carrier to the ammonia. Due to the fact that the total fluid flow is at least substantially constant, the penetration and distribution of the ammonia containing fluid into the exhaust gas passage is substantially unchanged even when the amount of ammonia fed into the passage changes. Therefore, good distribution of ammonia can be obtained in any conditions, even when the need for ammonia is relatively low. Thus, feeding of surplus ammonia, which would bind to the fly ash and/or cause harmful ammonia slip to the environment, can be minimized. It is in some cases also possible to design the injection nozzles and feeding procedure without using a gaseous propellant, such as steam or air.

By using the present invention, the ratio of the amount of the ammonia containing fluid injected into the exhaust gas, and ratio of the flows of the ammonia containing fluid and the dilution fluid, can be efficiently controlled, for example, based on the combustion conditions or load conditions of the combustion plant.

According to an embodiment of the present invention, a connection means that enables to temporarily arrange the first fluid line in flow connection with the source of dilution fluid is arranged between the first and second fluid lines. The connection means enables cleaning the first fluid line by the dilution fluid by temporarily arranging the first fluid line in flow connection with the source of dilution fluid. More particularly, when the dilution fluid is allowed to flow into the first fluid line, the dilution fluid will clean the first fluid line, the first inlet of the multiple valve members and outlet of the multiple valve members.

This procedure provides an efficient way to maintain the first fluid line clean and reduce the erosion or blocking due to the ammonia containing fluid. The cleaning, or in other words the flushing, of the first fluid line, the first inlet of the multiple valve members and outlet of the multiple valve members may be arranged based on predetermined timing periods. The cleaning may also be arranged to react to changing operational loads of the combustion plant so as to prevent blocking.

The connection means enabling to temporarily arrange the first fluid line in flow connection with the source of dilution fluid comprises advantageously a three-way valve arranged in the first fluid line. The three-way valve is then generally arranged so that an upstream portion of the first fluid line is in flow connection with a first inlet of the three-way valve, the second fluid line is in flow connection with a second inlet of the three-way valve and a downstream portion of the first fluid line is in flow connection with an outlet of the three-way valve.

The connection means may be connected to the first fluid line either upstream of the pump arranged in the first fluid line or between the pump and the multiple valve members. It is also possible to have two connection means, one upstream of the pump and the second one between the pump and the multiple valve members. The connection means between the pump and the multiple valve members can be particularly used for cleaning the downstream portions of the first fluid line and the first inlets of the multiple valve members by the dilution fluid. The connection means upstream of the pump can correspondingly be used also for cleaning the pump and upstream portions of the first fluid line.

According to an embodiment of the present invention, the control unit is part of a distributed control system (DCS). Then, there is no need for local operation to control the NOₓ reduction, but the control unit, and the operation of each of the valve members, can be controlled remotely by the DCS.

According to an aspect, the present invention provides a combustion plant comprising at least one arrangement for feeding ammonia containing fluid into an exhaust gas passage of the combustion plant, as described in any embodiments above. The combustion plant can be, for example, a fluidized bed boiler, such as a circulating fluidized bed boiler or a bubbling bed boiler, a PC boiler or an incinerator.

Typically a combustion plant comprises more than one arrangement for feeding ammonia, as described above. Generally such arrangements feed ammonia containing fluid into different portions of the exhaust gas passage. For example, a circulating fluidized bed boiler may comprise separate arrangements for feeding ammonia into an upper portion of a furnace, a channel between the furnace and a particle separator, a particle separator and an exhaust gas passage downstream of the particle separator.

Multiple ammonia feeding arrangements may advantageously have common sources of ammonia containing fluid and dilution fluid, common first and second fluid lines, which branch off to the individual feeding arrangements, and common pumps for maintaining a predetermined fluid pressure in the first and second fluid lines. Each branch of the first fluid line comprises advantageously its own connection means to the second fluid line to clean the respective feeding arrangement, as described above. This arrangement provides the advantage that, for example, one ammonia feeding arrangement can be cleaned at the time when other ammonia feeding arrangements are in operation. However, there may also be connection means upstream of a common pump to enable simultaneous cleaning of all the multiple ammonia feeding arrangements. Alternatively it is possible that multiple ammonia feeding arrangements are independent in the sense that they have, for example, own sources of ammonia containing fluid, possibly of different ammonia containing fluids.

The above brief description, as well as further objects, features, and advantages of the present invention will be more fully appreciated by reference to the following detailed description of the presently preferred, but nonetheless illustrative, embodiments in accordance with the present invention, when taken in conjunction with the accompanying drawings.

### BRIEF DESCRIPTION OF THE DRAWINGS

Fig. 1 schematically illustrates an arrangement for feeding ammonia containing fluid into an exhaust gas passage of a combustion plant according to an embodiment of the invention.
Fig. 2 schematically illustrates a combustion plant with arrangements for feeding ammonia containing fluid into an exhaust gas passage of the combustion plant according to an embodiment of the invention.

### DETAILED DESCRIPTION OF THE INVENTION

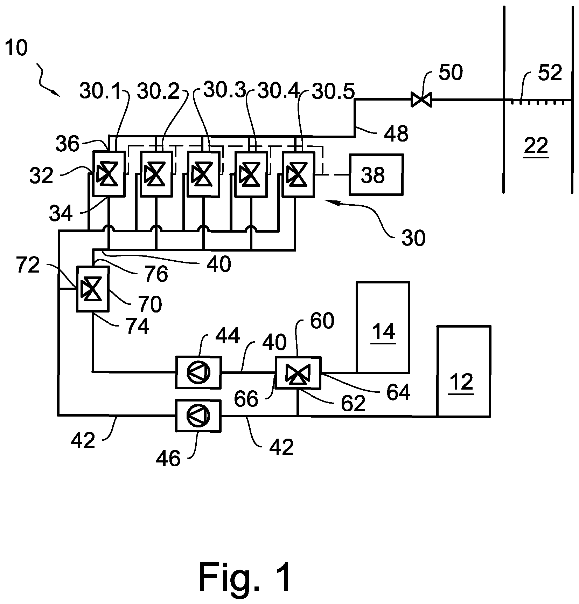

The schematic diagram of Fig. 1 illustrates an arrangement 10 for feeding ammonia containing fluid into an exhaust gas passage 22 of a combustion plant according to the invention. The arrangement comprises a first fluid line 40 in flow connection with a source of an ammonia containing fluid 14 and a second fluid line 42 in flow connection with a source of a dilution fluid 12 which can be, for example, water. The ammonia containing fluid is typically ammonia solution in water wherein ammonia concentration is preferably between 0 % - 25 %, or even more preferably substantially 25 %. The arrangement 10 further comprises a control unit 38 for controlling multiple valve members 30.1, 30.2, 30.3, 30.4, 30.5 of a valve unit 30. The multiple valve members 30.1, 30.2, 30.3, 30.4, 30.5 are connected in parallel so that each of the valve members has a first inlet 34 in flow connection with the first fluid line 40, a second inlet 32 in flow connection with the second fluid line 42 and an outlet 36 in flow connection with a common outlet channel 48 which is connected to the exhaust gas passage 22.

The control unit 38 is adapted for controlling each of the valve members 30.1, 30.2, 30.3, 30.4, 30.5 to maintain open flow path only from one of the inlets, i.e. either from the first inlet 34 or from the second inlet 32, to the outlet 36. Thereby a flow of either the ammonia containing fluid or the dilution fluid is fed via the valve member to the common outlet channel 48 and to the exhaust gas passage 22. Advantageously each of the multiple valve members 30.1, 30.2, 30.3, 30.4, 30.5 is a three-way valve.

The multiple valve members 30.1, 30.2, 30.3, 30.4 and 30.5 can have different specific, or nominal, throughputs. This means that, assuming that the ammonia containing fluid and dilution fluid are at a predetermined pressure, each of the multiple valve members feeds a predefined flow of ammonia containing fluid or dilution fluid via the valve member to the exhaust gas passage 22. In one embodiment, each of the multiple valve members 30.1, 30.2, 30.3, 30.4 and 30.5 has a different specific throughput. For example, the first, second, third, fourth and fifth valve member 30.1, 30.2, 30.3, 30.4 and 30.5 have, respectively, throughputs of 1, 2, 4, 8 and 16 l/h. Thereby, the multiple valve members control the ratio of the flow of the ammonia containing fluid and the flow of the dilution fluid in the common outlet channel 48, but the total flow of fluid through the valve members, and through the common outlet channel 48, is always 31 l/h.

As an example, assuming that the conditions require, based on experience or specific measurements, that ammonia containing fluid is to be fed to the exhaust gas passage at a rate of 3 l/h. Then, the first valve member 30.1 is controlled to open a flow path from the first fluid line 40 to the outlet channel 48. Thereby the first valve member provides a flow of 1 l/h of ammonia containing fluid to the outlet channel 48. Correspondingly, the second valve member 30.2 is controlled to open a flow path from the first fluid line 40 to the outlet channel 48, and thus it provides a flow of 2 l/h of ammonia containing fluid to the outlet channel 48. At the same time, the third, fourth and fifth valve members 30.3, 30.4 and 30.5 are controlled to open a flow path from the second fluid line to the outlet channel 48, a provide a total flow of 28 l/h of dilution fluid to the outlet channel. In this described example, the resolution of the flow control is 1 l/h. Naturally, the resolution can be freely selected based, for example, on the size of the plant. Thus, the resolution can be, for example, 0.5 l/h or 2 l/h.

The common outlet channel 48 is advantageously provided with an outlet valve 50, preferably an on-off valve, which will open or close the flow path to the exhaust gas passage 22. The end portion of the outlet channel 48, within the exhaust gas passage 22, is advantageously provided with multiple injection means such as conventional spray nozzles 52 so as to efficiently distribute the mixture of ammonia containing fluid and dilution fluid into exhaust gas flowing in the exhaust gas passage 22. Ammonia acts as a reducing agent for the nitrogen oxides NOₓ.

The first fluid line 40 may be provided with a pump 44 to maintain a predetermined pressure of the fluid ammonia containing fluid in the first fluid line 40. Similarly, the second fluid line 42 may be provided with a pump 46 to maintain a predetermined pressure of the dilution fluid in the second fluid line 42.

Between the first and second fluid lines 40, 42 is advantageously arranged connection means 60, 70 enabling to temporarily arrange the first fluid line 40 in flow connection with the source of the dilution fluid 12. Advantageously, the connection means comprises a three-way valve 60, 70 arranged in the first fluid line 40 so as to have an upstream portion of the first fluid line 40 in fluid connection with a first inlet 64, 74 of the three-way valve, the second fluid line 42 in fluid connection with a second inlet 62, 72 of the three-way valve, and a downstream portion of the first fluid line 40 in fluid connection with an outlet 76, 66 of the three-way valve. As indicated in Fig. 1, first connection means 60 is located upstream the pump 44 of the first fluid line 40 and second connection means 70 is located downstream the pump 44 of the first fluid line 40 and upstream the multiple valve members 30.1, 30.2, 30.3, 30.4 and 30.5.

The second connection means 70 can be used to clean the multiple valve members 30.1, 30.2, 30.3, 30.4 and 30.5 of the valve unit 30, especially the first inlets 34 of the multiple valve members as well as a downstream portion of the first fluid line 40 by the dilution fluid. This can be done by arranging the first fluid line in flow connection with the source of dilution fluid 12. More particularly, by closing the first inlet 74 and opening the second inlet 72 of the second connection means 70, the dilution fluid from the second fluid line 42 is allowed to flow via the downstream portion of the first fluid line to the first inlets 34 of the valve unit 30. The first connection means 60 can correspondingly be used to clean also an upstream portion of the first fluid line 40, as well as the pump 44 in the first fluid line 40 by the dilution fluid. Usually an arrangement 10 for feeding ammonia containing fluid into an exhaust gas passage comprises one of the first and second connection means 60, 70, but it is also possible to have both the first and second connection means, as in Fig. 1.

Operation of the valve unit 30, i.e. the multiple valve members 30.1, 30.2, 30.3, 30.4 and 30.5, is advantageously controlled in any prevailing operating so as to reduce NOₓ emissions to a desired level by controlling the control unit by a control signal, which is preferably based on a binary logic. The multiple valve members are advantageously part of a distributed control system (DCS), so as to control the multiple valve members remotely by the distributed control system.

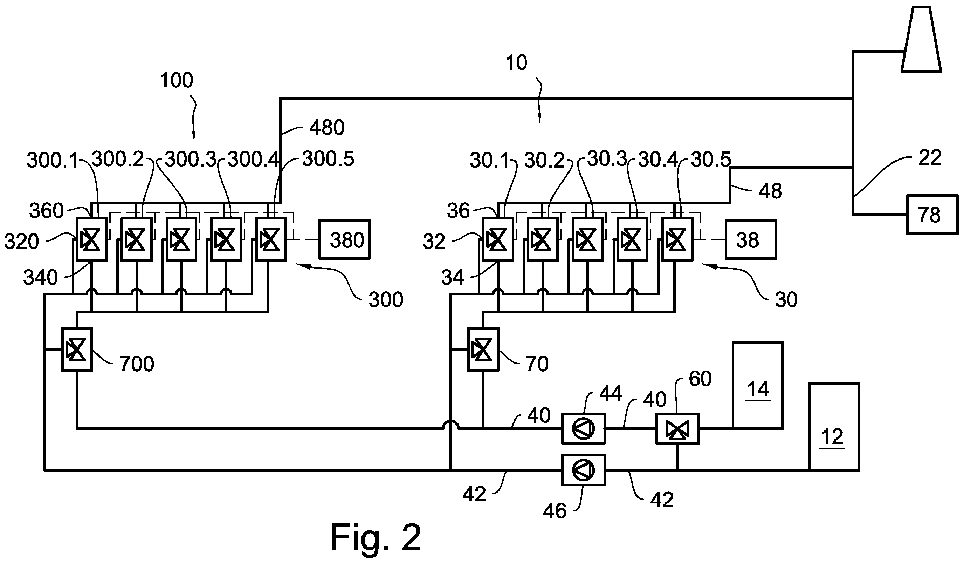

The schematic diagram of Fig. 2 illustrates a combustion plant 78 with arrangements 10, 100 for feeding ammonia containing fluid into an exhaust gas passage 22 of the combustion plant according to an embodiment of the invention. The first and second arrangements 10, 100 shown in Fig. 2 correspond mainly the arrangement 10 in Fig. 1. The reference numbers of the first arrangement 10 in Fig 2 correspond to the reference number of the arrangement 10 in Fig. 1, and the reference numbers of the second arrangement 100 are formed by multiplying corresponding reference numbers of the arrangement 10 in Fig. 1 by 10.

The first and second feeding arrangements 10, 100 have common sources of ammonia containing fluid 14 and dilution fluid 12, common first 40 and second 60 fluid lines, which branch off to the individual feeding arrangements, and common pumps 44, 46 for maintaining a predetermined fluid pressure in the first and second fluid lines. Each branch of the first fluid line comprises advantageously its own connection means 70, 700 to the second fluid line 60 to clean the respective feeding arrangement, as described in connection with Fig. 1. However, there is also connection means 60 upstream of the common pump 44 in the first fluid line 40 to enable simultaneous cleaning of the both ammonia feeding arrangements 10, 100.

The outlet channel 480 of the second feeding arrangement 100 is generally connected to the exhaust gas passage 22 at a different location than the outlet channel 48 of the first feeding arrangement. The connection locations can be, for example, at different heights in an exhaust gas channel, at different positions within a stage of the exhaust gas passage or at different stages of the exhaust gas passage. By using such versatile ammonia feeding systems, it is possible to accurately optimize the feeding of ammonia in different operating conditions of the combustion plant.

As becomes clear from above, an arrangement for and a method of feeding ammonia containing fluid into an exhaust gas passage of a combustion plant is applicable for a number of various applications and purposes. It should be understood that even though figures illustrate embodiments with the valve unit having five parallel valve members, the number of parallel valve members may in practice vary. While the invention has been described herein by way of examples in connection with what are at present considered to be the most preferred embodiments, it is to be understood that the invention is not limited to the disclosed embodiments, but is intended to cover various combinations or modifications of its features and several other applications included within the scope of the invention as defined in the appended claims.

## Claims

1. An arrangement (10, 100) for feeding ammonia containing fluid into an exhaust gas passage (22) of a combustion plant comprising a first fluid line (40) connectable in flow connection with a source of an ammonia containing fluid (14), a second fluid line (42) in flow connection with a source of a dilution fluid (12) and a control unit (38,380) for controlling multiple valve members (30.1, 30.2, 30.3, 30.4, 30.5, 300.1, 300.2, 300.3, 300.4, 300.5) of a valve unit (30), each of the valve members having a first inlet (34, 340) in flow connection with the first fluid line, a second inlet (32, 320) in flow connection with the second fluid line and an outlet (36, 360) in flow connection with a common outlet channel (48, 480) connected to the exhaust gas passage (22), **characterized in that** the valve members are connected in parallel so that the outlet of each of the valve members is in flow connection with the common outlet channel (48, 480), wherein the control unit is adapted for controlling each of the valve members to maintain open flow path from either the first inlet (34, 340) or the second inlet (32, 320) to the outlet (36, 360) so as to feed a flow of either the ammonia containing fluid or the dilution fluid via the valve member to the common outlet channel (48, 480).

2. Arrangement according to claim 1, **characterized in that** each of the multiple valve members comprises a three-way valve.

3. Arrangement according to claim 1, **characterized in that** each of the multiple valve members has a specific throughput to feed a predefined flow of either the ammonia containing fluid or the dilution fluid via the valve member to the exhaust gas passage.

4. Arrangement according to claim 3, **characterized in that** each of the multiple valve members has a different specific throughput.

5. Arrangement according to claim 4, **characterized in that** the valve unit (30) comprises N valve members numbered as 1, 2, 3,..., N and having relative specific throughputs as 1, 2, 4,..., 2^{(N-1)}.

6. Arrangement according to claim 1, **characterized in that** each of the first and second fluid lines (40, 42) is provided with a pump (44, 46) to maintain a predetermined fluid pressure in the first and second fluid lines, respectively.

7. Arrangement according to claim 1, **characterized in that** between the first and second fluid lines (40, 42) is arranged a connection means (60, 70, 700) that enables to temporarily arrange the first fluid line (40) in flow connection with the source of dilution fluid (12).

8. Arrangement according to claim 7, **characterized in that** the connection means comprises a three-way valve (60, 70, 700) arranged in the first fluid line (40) so as to have an upstream portion of the first fluid line (40) in flow connection with a first inlet (64, 74, 740) of the three-way valve, the second fluid line (42) in flow connection with a second inlet (62, 72, 720) of the three-way valve and a downstream portion of the first fluid line (40) in flow connection with an outlet (76, 66, 760) of the three-way valve.

9. Arrangement according to claim 1, **characterized in that** the control unit (38, 380) is part of a distributed control system (DCS).

10. A combustion plant, **characterized by** having at least one arrangement for feeding ammonia containing fluid into an exhaust gas passage (22) of the combustion plant according to any of the preceding claims 1-9.

11. A method of feeding ammonia containing fluid into an exhaust gas passage (22) of a combustion plant comprising the steps of introducing an ammonia containing fluid from a source of an ammonia containing fluid into a first fluid line, introducing a dilution fluid from a source of a dilution fluid into a second fluid line, and controlling multiple valve members (30.1, 30.2, 30.3, 30.4, 30.5, 300.1, 300.2, 300.3, 300.4, 300.5) of a valve unit (30) with a control unit (38, 380), each of the valve members having a first inlet (34, 340) in flow connection with the first fluid line, a second inlet (32, 320) in flow connection with the second fluid line and an outlet (36, 360) in flow connection with a common outlet channel (48, 480) connected to the exhaust gas passage (22), **characterized by** the valve members being connected in parallel so that each of the valve members is in flow connection with the common outlet channel (48, 480), and by the step of controlling each of the valve members by the control unit to maintain open flow path from either the first inlet (34, 340) or the second inlet (32, 320) to the outlet (36, 360) so as to feed a flow of either the ammonia containing fluid or the dilution fluid via the valve member to the common outlet channel (48, 480).

12. Method according to claim 11, **characterized in that** the ammonia containing fluid is ammonia solution in water and the dilution fluid is water.

13. Method according to claim 11, **characterized by** controlling the multiple valve members so as to control the ratio of the flow of the ammonia containing fluid and the flow of the dilution fluid in the common outlet channel (48, 480).

14. Method according to claim 13, **characterized in that** the multiple valve members comprise N valve members numbered as 1, 2, 3,..., N and having relative specific throughputs as 1, 2, 4,..., 2^{(N-1)}.

15. Method according to claim 11, **characterized by** maintaining a predetermined fluid pressure in each of the first and second fluid lines (40, 42) by a pump (44, 46).

16. Method according to claim 11, **characterized by** the step of cleaning the first inlet (34, 340) and the first fluid line (40) by temporarily arranging the first fluid line in flow connection with the source of dilution fluid (12).

17. Method according to claim 11, **characterized by** controlling the multiple valve members with a distributed control system (DCS).

## Patentansprüche

1. Anordnung (10, 100) zur Einleitung von ammoniakhaltigem Fluid in einen Abgaskanal (22) einer Verbrennungsanlage, umfassend eine erste Fluidleitung (40), die in Strömungsverbindung mit einer Quelle für ammoniakhaltiges Fluid (14) anschließbar ist, eine zweite Fluidleitung (42) in Strömungsverbindung mit einer Quelle für Verdünnungsfluid (12) und eine Steuereinheit (38, 380) zur Ansteuerung von mehreren Ventilorganen (30.1, 30.2, 30.3, 30.4, 30.5, 300.1, 300.2, 300.3, 300.4, 300.5) einer Ventileinheit (30), wobei jedes der Ventilorgane einen ersten Eintritt (34, 340) in Strömungsverbindung mit der ersten Fluidleitung, einen zweiten Eintritt (32, 320) in Strömungsverbindung mit der zweiten Fluidleitung und einen Austritt (36, 360) in Strömungsverbindung mit dem gemeinsamen Austrittkanal (48, 480) hat, der mit dem Abgaskanal (22) verbunden ist, **dadurch gekennzeichnet, dass** die Ventilorgane derart parallelgeschaltet sind, dass der Austritt eines jeden der Ventilorgane in Strömungsverbindung mit dem gemeinsamen Austrittskanal (48, 480) ist, wobei die Steuereinheit zur Ansteuerung eines jeden der Ventilorgane angepasst ist, um den Strömungsweg von entweder dem ersten Eintritt (34, 340) oder dem zweiten Eintritt (32, 320) zum Austritt (36, 360) offenzuhalten, um einen Strom entweder des ammoniakhaltigen Fluids oder des Verdünnungsfluids durch das Ventilorgan dem gemeinsamen Austritt (48, 480) zuzuführen.

2. Anordnung nach Patentanspruch 1, **dadurch gekennzeichnet, dass** jedes der mehreren Ventilorgane ein Dreiwegeventil umfasst.

3. Anordnung nach Patentanspruch 1, **dadurch gekennzeichnet, dass** jedes der mehreren Ventilorgane einen spezifischen Durchsatz hat, um einen vorherbestimmten Strom des entweder ammoniakhaltigen Fluids oder des Verdünnungsfluids durch das Ventilorgan dem Abgaskanal zuzuführen.

4. Anordnung nach Patentanspruch 3, **dadurch gekennzeichnet, dass** jedes der mehreren Ventilorgane einen unterschiedlichen spezifischen Durchsatz hat.

5. Anordnung nach Patentanspruch 4, **dadurch gekennzeichnet, dass** das die Ventileinheit (30) n Ventilorgane mit den Nummern 1, 2, 3,..., n umfasst und relative spezifische Durchsätze 1, 2, 4, ..., 2⁽ⁿ⁻¹⁾ aufweist.

6. Anordnung nach Patentanspruch 1, **dadurch gekennzeichnet, dass** die erste und zweite Fluidleitung (40, 42) jeweils mit einer Pumpe (44, 46) versehen sind, um einen vorherbestimmten Fluiddruck jeweils in der ersten und der zweiten Fluidleitung aufrechtzuerhalten.

7. Anordnung nach Patentanspruch 1, **dadurch gekennzeichnet, dass** zwischen der ersten und zweiten Fluidleitung (40, 42) ein Verbindungsmittel (60, 70, 700) angeordnet ist, das es ermöglicht, die erste Fluidleitung (40) vorübergehend in Strömungsverbindung mit der Quelle für Verdünnungsfluid (12) anzuordnen.

8. Anordnung nach Patentanspruch 7, **dadurch gekennzeichnet, dass** die Verbindungsmittel ein Dreiwegeventil (60, 70, 700) umfassen, das in der ersten Fluidleitung (40) angeordnet ist, um einen stromaufwärts gelegenen Teil der ersten Fluidleitung (40) in Strömungsverbindung (40) mit einem ersten Eintritt (64, 74, 740) des Dreiwegeventils, die zweite Fluidleitung (42) mit einem zweiten Eintritt (62, 72, 720) des Dreiwegeventils, und einen stromabwärts gelegenen Teil der ersten Fluidleitung (40) in Strömungsverbindung (40) mit einem Austritt (76, 66, 760) des Dreiwegeventils zu haben.

9. Anordnung nach Patentanspruch 1, **dadurch gekennzeichnet, dass** die Steuereinheit (38, 380) Teil eines verteilten Steuersystems (distributed control system, DCS) ist.

10. Verbrennungsanlage, **dadurch gekennzeichnet, dass** sie zumindest eine Anordnung zur Einführung von ammoniakhaltigem Fluid in einen Abgaskanal (22) der Verbrennungsanlage nach einem der vorhergehenden Patentansprüche 1 bis 9 umfasst.

11. Verfahren zur Einführung von ammoniakhaltigem Fluid in einen Abgaskanal (22) einer Verbrennungsanlage, die Schritte zur Einführung von ammoniakhaltigem Fluid aus einer Quelle für ammoniakhaltiges Fluid in eine erste Fluidleitung, Einführung eines Verdünnungsfluids aus einer Quelle für Verdünnungsfluid in eine zweite Fluidleitung und Ansteuerung von mehreren Ventilorganen (30.1, 30.2, 30.3, 30.4, 30.5, 300.1, 300.2, 300.3, 300.4, 300.5) einer Ventileinheit (30) mit einer Steuereinheit (38, 380), wobei jedes der Ventilorgane einen ersten Eintritt (34, 340) in Strömungsverbindung mit der ersten Fluidleitung, einen zweiten Eintritt (32, 320) in Strömungsverbindung mit der zweiten Fluidleitung und einen Austritt (36, 360) in Strömungsverbindung mit dem Austrittkanal (48, 480) hat, der mit dem Abgaskanal (22) verbunden ist, **dadurch gekennzeichnet, dass** die Ventilorgane derart parallelgeschaltet sind, dass jedes der Ventilorgane mit dem gemeinsamen Austrittkanal (48, 480) verbunden ist und durch den Schritt, wo jedes der Ventilorgane durch die Steuereinheit angesteuert wird, um den Strömungsweg von entweder dem ersten Eintritt (34, 340) oder dem zweiten Eintritt (32, 320) zum Austritt (36, 360) offenzuhalten, um einen Strom des entweder ammoniakhaltigen Fluids oder des Verdünngsfluids durch das Ventilorgan dem gemeinsamen Austrittkanal (48, 480) zuzuführen.

12. Verfahren nach Patentanspruch 1, **dadurch gekennzeichnet, dass** es sich beim dem ammoniakhaltigen Fluid um eine Ammoniaklösung in Wasser und beim Verdünnungsfluid um Wasser handelt.

13. Verfahren nach Patentanspruch 11, **gekennzeichnet durch** Ansteuerung der mehreren Ventilorgane auf solche Weise, dass das Verhältnis zwischen dem Strom von ammoniakhaltigem Fluid und dem Strom von Verdünnungsfluid im gemeinsamen Austrittkanal (48, 480) kontrolliert wird.

14. Verfahren nach Patentanspruch 13, **dadurch gekennzeichnet, dass** die mehreren Ventilorgane n Ventilorgane mit den Nummern 1, 2, 3, ..., n umfassen und relative spezifische Durchsätze 1, 2, 4, ..., 2⁽ⁿ⁻¹⁾ aufweisen.

15. Verfahren nach Patentanspruch 11, **dadurch gekennzeichnet, dass** ein vorherbestimmter Fluiddruck jeweils in der ersten und zweiten Fluidleitung (40, 42) durch eine Pumpe (44, 46) aufrechterhalten wird.

16. Verfahren nach Patentanspruch 11, **gekennzeichnet durch** den Schritt zur Reinigung des ersten Eintritts (34, 340) und der ersten Fluidleitung (40) **dadurch**, dass die erste Fluidleitung vorübergehend in Strömungsverbindung mit der Quelle für Verdünnungsflüssigkeit (12) gebracht wird.

17. Verfahren nach Patentanspruch 11, **dadurch gekennzeichnet, dass** die mehreren Ventilorgane mit einem verteilten Steuersystem (distributed control system, DCS) angesteuert wird.

## Revendications

1. Agencement (10, 100) permettant l'apport d'un fluide contenant de l'ammoniaque dans un passage de gaz d'échappement (22) d'une installation de combustion comprenant une première ligne de fluide (40) apte à être reliée en liaison d'écoulement à une source d'un fluide contenant de l'ammoniaque (14), une seconde ligne de fluide (42) en liaison d'écoulement avec une source d'un fluide de dilution (12) et une unité de commande (38, 380) permettant de commander de multiples éléments de soupape (30.1, 30.2, 30.3, 30.4, 30.5, 300.1, 300.2, 300.3, 300.4, 300.5) d'une unité de soupape (30), chacun des éléments de soupape ayant une première entrée de soupape (34, 340) en liaison d'écoulement avec la première ligne de fluide, une seconde entrée de soupape (32, 320) en liaison d'écoulement avec la seconde ligne de fluide et une sortie de soupape (36, 360) en liaison d'écoulement avec un canal de sortie de soupape commun (48, 480) relié au passage de gaz d'échappement (22), **caractérisé en ce que** les éléments de soupape sont reliés en parallèle de sorte que la sortie de soupape de chaque élément de soupape soit en liaison d'écoulement avec le canal de sortie de soupape commun (48, 480), dans lequel l'unité de commande est adaptée pour commander chacun des éléments de soupape pour maintenir un trajet d'écoulement ouvert à partir soit de la première entrée de soupape (34, 340), soit de la seconde entrée de soupape (32, 320) vers la sortie de soupape (36, 360), de manière à apporter un écoulement soit du fluide contenant de l'ammoniaque, soit du fluide de dilution vers l'élément de soupape dans le canal de sortie de soupape commun (48, 480).

2. Agencement selon la revendication 1, **caractérisé en ce que** chacun des multiples éléments de soupape comprend une soupape à trois voies.

3. Agencement selon la revendication 1, **caractérisé en ce que** chacun des multiples éléments de soupape a un débit spécifique pour apporter un écoulement prédéfini soit du fluide contenant de l'ammoniaque soit du fluide de dilution via l'élément de soupape dans le passage de gaz d'échappement.

4. Agencement selon la revendication 3, **caractérisé en ce que** chacun des multiples éléments de soupape a un débit spécifique différent.

5. Agencement selon la revendication 4, **caractérisé en ce que** l'unité de soupape (30) comprend N éléments de soupape numérotés de 1, 2, 3, ..., N et ayant des débits spécifiques relatifs de 1, 2, 4, ..., 2^{(N-1)}*.*

6. Agencement selon la revendication 1, **caractérisé en ce que** chacune des première et seconde lignes de fluide (40, 42) est pourvue d'une pompe (44, 46) pour maintenir une pression de fluide prédéterminée dans les première et seconde lignes de fluide, respectivement.

7. Agencement selon la revendication 1, **caractérisé en ce qu'**un moyen de liaison (60, 70, 700) est agencé entre les première et seconde lignes de fluide (40, 42), lequel permet d'agencer temporairement la première ligne de fluide (40) en liaison d'écoulement avec la source du fluide de dilution (12).

8. Agencement selon la revendication 7, **caractérisé en ce que** le moyen de liaison comprend une soupape à trois voies (60, 70, 700) agencée dans la première ligne de fluide (40), de sorte à avoir une portion en amont de la première ligne de fluide (40) en liaison d'écoulement avec une première entrée de soupape (64, 74, 740) de la soupape à trois voies, la seconde ligne de fluide (42) en liaison d'écoulement avec une seconde entrée de soupape (62, 72, 720) de la soupape à trois voies et une portion en aval de la première ligne de fluide (40) en liaison d'écoulement avec une sortie de soupape (76, 66, 760) de la soupape à trois voies.

9. Agencement selon la revendication 1, **caractérisé en ce que** l'unité de commande (38, 380) fait partie d'un système numérique de contrôle-commande (SNCC).

10. Installation de combustion, **caractérisée en ce qu'**elle comporte au moins un agencement permettant l'apport d'un fluide contenant de l'ammoniaque dans un passage de gaz d'échappement (22) de l'installation de combustion selon l'une quelconque des revendications précédentes 1 à 9.

11. Procédé d'apport d'un fluide contenant de l'ammoniaque dans un passage de gaz d'échappement (22) d'une installation de combustion comprenant les étapes d'introduction d'un fluide contenant de l'ammoniaque provenant d'une source d'un fluide contenant de l'ammoniaque dans une première ligne de fluide, d'introduction d'un fluide de dilution provenant d'une source d'un fluide de dilution dans une seconde ligne de fluide, et de commande de multiples éléments de soupape (30.1, 30.2, 30.3, 30.4, 30.5, 300.1, 300.2, 300.3, 300.4, 300.5) d'une unité de soupape (30) avec une unité de commande (38, 380), chacun des éléments de soupape ayant une première entrée de soupape (34, 340) en liaison d'écoulement avec la première ligne de fluide, une seconde entrée de soupape (32, 320) en liaison d'écoulement avec la seconde ligne de fluide et une sortie de soupape (36, 360) en liaison d'écoulement avec un canal de sortie de soupape commun (48, 480) relié au passage de gaz d'échappement (22), **caractérisé en ce que** les éléments de soupape sont reliés en parallèle de sorte que chacun des éléments de soupape soit en liaison d'écoulement avec le canal de sortie de soupape commun (48, 480), et
par l'étape de commande de chacun des éléments de soupape par l'unité de commande afin de maintenir un trajet d'écoulement ouvert à partir soit de la première entrée de soupape (34, 340), soit de la seconde entrée de soupape (32, 320) vers la sortie de soupape (36, 360), de manière à apporter un écoulement soit du fluide contenant de l'ammoniaque, soit du fluide de dilution via l'élément de soupape dans le canal de sortie de soupape commun (48, 480).

12. Procédé selon la revendication 11, **caractérisé en ce que** le fluide contenant de l'ammoniaque est une solution d'ammoniaque dans l'eau et le fluide de dilution est de l'eau.

13. Procédé selon la revendication 11, **caractérisé par** la commande des multiples éléments de soupape de façon à commander le rapport entre l'écoulement du fluide contenant de l'ammoniaque et l'écoulement du fluide de dilution dans le canal de sortie de soupape commun (48, 480).

14. Procédé selon la revendication 13, **caractérisé en ce que** les multiples éléments de soupape comprennent N éléments de soupape numérotés de 1, 2, 3, ..., N et ayant des débits spécifiques relatifs de 1, 2, 4, ..., 2^{(N-1)}*.*

15. Procédé selon la revendication 11, **caractérisé par** le maintien d'une pression de fluide prédéterminée dans chacune des première et seconde lignes de fluide (40, 42) par une pompe (44, 46).

16. Procédé selon la revendication 11, **caractérisé par** l'étape de nettoyage de la première entrée de soupape (34, 340) et de la première ligne de fluide (40) en agençant temporairement la première ligne de fluide en liaison d'écoulement avec la source du fluide de dilution (12).

17. Procédé selon la revendication 11, **caractérisé par** la commande des multiples éléments de soupape avec un système numérique de contrôle-commande (SNCC).
